# EUROPÄISCHE PATENTANMELDUNG

(11) **EP 4 477 379 A1**
(43) Veröffentlichungstag der Anmeldung: **18.12.2024**
(21) Anmeldenummer: 24179580.6
(22) Anmeldetag: 03.06.2024
(51) Int. Cl.: B29C 45/46, B29C 45/52

(54) **SPRITZGIESSANORDNUNG**

(30) Priorität: 06.06.2023 DE 102023114776
(71) Anmelder: Groche Technik GmbH, 32689 Kalletal (DE)
(72) Erfinder: Groche, Armin, 32689 Kalletal (DE)
(74) Vertreter: Hafner & Kohl PartmbB

(57) **Zusammenfassung**

Spritzgießanordnung (1), umfassend einen eine zylinderartige bzw. -förmige Aufnahmekammer (2) aufweisenden Aufnahmekörper (3) und eine in dem Aufnahmekörper (3) angeordnete Schnecke (4), wobei
eine an dem Aufnahmekörper (3) anordenbare oder angeordnete Adaptereinrichtung (5) zur Einstellung eines in eine Formwerkzeugkavität eines Spritzgießwerkzeugs einzuspritzenden Menge an Spritzgießmaterial, wobei die Adaptereinrichtung (5) aufweist:
- einen Grundkörper (6), welcher wenigstens eine Befestigungsschnittstelle (7) aufweist, über welche er an dem Aufnahmekörper (3) befestigbar oder befestigt ist, wobei in dem Grundkörper (6) wenigstens eine Aufnahmeöffnung (8) zur Lagerung eines an der Schnecke (4) befestigbaren oder befestigten Adapterkolben (9)s ausgebildet ist,
- einen in der wenigstens einen Aufnahmeöffnung (8) lagerbaren oder gelagerten Adapterkolben (9), welcher wenigstens eine Befestigungsschnittstelle (17) aufweist, über welche der Adapterkolben (9) an der Schnecke (4) befestigbar oder befestigt ist,
- einen an dem Grundkörper (6) angeordneten oder ausgebildeten, wenigstens eine, insbesondere düsenartige bzw. -förmige, Austrittsöffnung (10) aufweisenden Düsenkörper (11), wobei der Düsenkörper (11) und der Adapterkolben (9) ein definiertes Aufnahmevolumen für eine über die Austrittsöffnung (10) in eine Formwerkzeugkavität eines Spritzgießwerkzeugs einzuspritzende Menge an Spritzgießmaterial begrenzen.

## Beschreibung

Die Erfindung betrifft eine Spritzgießanordnung, umfassend einen eine zylinderartige bzw. -förmige Aufnahmekammer aufweisenden Aufnahmekörper und eine in dem Aufnahmekörper angeordnete Schnecke.

Entsprechende Spritzgießanordnungen bzw. Spritzgießvorrichtungen sind aus dem Stand der Technik dem Grunde nach bekannt. Die Spritzgießanordnung bzw. eine in einem Spritzgießverfahren eingesetzte Spritzgießvorrichtung erzeugt Kunststoffteile, wobei als Ausgangsstoff ein Kunststoff in Granulat- oder Pulverform verwendet wird. In einer Spritzeinheit wird die zur Herstellung des wenigstens einen Kunststoffteils benötigte Formmasse aufbereitet und in eine eine Kavität aufweisende Matrize gespritzt. Die Kavität bildet dabei eine Negativform des herzustellenden Kunststoffteils. Die Spritzgießmaschine umfasst eine Spritzeinheit, auch Plastifiziereinheit genannt, die das Rohmaterial aufbereitet und unter Druck in eine die Kavität aufweisende Form einspritzt. Dabei weist die Spritzgießanordnung einen eine zylinderartige bzw. zylinderförmige Aufnahmekammer aufweisenden Aufnahmekörper auf sowie eine in dem Aufnahmekörper angeordnete Schnecke. Die Spritzgießanordnung ist typischerweise aufgrund der Dimensionierung der Aufnahmekammer und der Schnecke auf definierte Ausbringmengen an Spritzgießmaterial pro Hubbewegung der Schnecke eingerichtet. Damit ist eine Spritzgießanordnung auf einen vordefinierten Volumenbereich für das Volumen des herzustellenden Bauteils ausgelegt. Sofern beispielsweise ein Bauteil gefertigt werden soll, das ein Volumen aufweist, welches geringer ist als die Untergrenze des Volumenbereichs, für welchen die Spritzgießanordnung ausgelegt ist, so muss eine andere Spritzgießanordnung eingesetzt werden, welche typischerweise eine kleinere Schnecke aufweist.

Der Erfindung liegt die Aufgabe zugrunde, eine Spritzgießanordnung anzugeben, welche insbesondere im Hinblick auf eine einfache und schnelle sowie kostengünstige Maßnahme die Verwendungsmöglichkeiten einer Spritzgießmaschine hinsichtlich der Volumengröße der mit dieser Spritzgießmaschine bzw. Spritzgießanordnung herzustellenden Bauteile zu erweitern.

Die Aufgabe wird durch eine Spritzgießanordnung gemäß Anspruch 1 gelöst. Die hierzu abhängigen Ansprüche betreffen mögliche Ausführungsformen der Spritzgießanordnung. Ferner wird die Aufgabe durch eine Adaptereinheit nach Anspruch 13 sowie durch eine Spritzgießmaschine nach Anspruch 14 gelöst.

Die Erfindung betrifft eine Spritzgießanordnung, umfassend einen eine zylinderartige bzw. -förmige Aufnahmekammer aufweisenden Aufnahmekörper und eine in dem Aufnahmekörper angeordnete Schnecke. In einer ersten Verwendung dieser Spritzgießanordnung wird diese zum Spritzgießen von Bauteilen verwendet, die in einem ersten Bauteilvolumenbereich liegen. Die Spritzgießanordnung umfasst eine an dem Aufnahmekörper anordenbare oder angeordnete Adaptereinrichtung zur Einstellung eines in eine Formwerkzeugkavität eines Spritzgießwerkzeugs einzuspritzenden Menge an Spritzgießmaterial. Die Formwerkzeugkavität bzw. dessen Volumen kann an das Bauteilvolumen des herzustellenden Bauteils angepasst sein bzw. diesem im Wesentlichen entsprechen. Die Adaptereinrichtung weist einen Grundkörper auf, welcher wenigstens eine Befestigungsschnittstelle aufweist, über welche er an dem Aufnahmekörper befestigbar oder befestigt ist. Mit anderen Worten kann über die grundkörperseitige Befestigungsschnittstelle der Grundkörper mit dem Aufnahmekörper befestigt werden. Insbesondere erfolgt die Befestigung des Grundkörpers mit dem Aufnahmekörper unter Ausbildung einer kraft- und/oder formschlüssigen Verbindung. In oder an dem Grundkörper ist wenigstens eine Aufnahmeöffnung zur Lagerung eines an der Schnecke befestigbaren oder befestigten Adapterkolbens ausgebildet. Die Aufnahmeöffnung kann beispielsweise eine geradlinige, bevorzugt eine zylindrische, besonders bevorzugt eine kreiszylindrische, Form aufweisen.

Die Adaptereinrichtung umfasst ferner einen in der wenigstens einen Aufnahmeöffnung lagerbaren oder gelagerten Adapterkolben, welcher wenigstens eine Befestigungsschnittstelle aufweist, über welche der Adapterkolben an der Schnecke befestigbar oder befestigt ist. Der Adapterkolben ist vermittels der Befestigungsschnittstelle, insbesondere unmittelbar und/oder bewegungsgekoppelt, mit der Schnecke verbunden. So kann der Adapterkolben eine Bewegung innerhalb der Aufnahmeöffnung ausführen, wenn die Schnecke innerhalb der Aufnahmekammer eine Bewegung, insbesondere eine Axialbewegung, ausführt. Insbesondere wird der Adapterkolben unter Ausbildung einer Steifen und/oder drehfesten Verbindung über die Befestigungsschnittstelle mit der Schnecke verbunden, sodass der Adapterkolben eine synchron mit der Schnecke erfolgende Drehbewegung ausführt, sofern die Schnecke zur Ausführung einer Drehbewegung angetrieben wird.

Die Lagerung des Adapterkolbens innerhalb der Aufnahmeöffnung kann beispielsweise derart erfolgen, dass der Adapterkolben eine, insbesondere eine Kreiszylindermantelfläche ausbildende, Gleitfläche umfasst, die mit der Form einer Innenwandung der Aufnahmeöffnung korrespondiert. Damit kann eine Gleitlagerung zwischen dem Adapterkolben und der Aufnahmeöffnung vorliegen, die eine relative Axialbewegung zwischen dem Adapterkolben und dem die Aufnahmeöffnung ausbildenden Element des Grundkörpers ermöglicht. Bevorzugt ist der die Gleitfläche umfassende Abschnitt des Adapterkolbens in der der Schnecke abgewandten Hälfte der Länge, bevorzugt dem der Schnecke abgewandten Viertel der Länge, besonders bevorzugt dem der Schnecke abgewandten Sechstel der Länge, des Adapterkolben angeordnet oder ausgebildet. Bevorzugt ist der die Gleitfläche des Adapterkolben ausbildende Abschnitt des Adapterkolben als ein zu dem Adapterkolben separate hergestelltes und mit dem Adapterkolben verbundenes, insbesondere gefügtes, Gleitelement (z. B. eine Gleithülse) ausgebildet oder als ein zumindest abschnittsweise, insbesondere vollständig, materialeinheitlich d. h. einstückig mit dem Adapterkolben ausgebildete Gleitfläche ausgebildet. Die Gleitfläche des Adapterkolbens kann eine mit einer Querschnittskonturform der Aufnahmeöffnung des Grundkörpers korrespondierende Querschnittskonturform aufweisen.

Auch umfasst die Adaptereinrichtung einen an dem Grundkörper angeordneten oder ausgebildeten, wenigstens eine, insbesondere düsenartige bzw. -förmige, Austrittsöffnung aufweisenden, Düsenkörper. Über die Austrittsöffnung des Düsenkörpers gelangt das von der Aufnahmekammer und über die Aufnahmeöffnung dem Düsenkörper zugeführte Spritzgießmaterial aus der Spritzanordnung heraus und kann in eine mit einer Kavität versehene Spritzgießform eingefüllt werden. Der Düsenkörper und der Adapterkolben begrenzen ein definiertes Aufnahmevolumen für eine über die Austrittsöffnung in eine Formwerkzeugkavität eines Spritzgießwerkzeugs einzuspritzende Menge an Spritzgießmaterial. Die konkrete Menge des Einspritzvolumens an Einspritzmaterial bildet ein Teilvolumen des von Düsenkörper und Adapterkolben definierten Aufnahmevolumen bzw. der dort vorliegenden Menge an Spritzgießmaterial und wird durch die Hubbewegung des Adapterkolbens relativ zu dem Düsenkörper und/oder relativ zu dem Düsenkörper und Grundkörper der Adaptereinrichtung definiert. Mit anderen Worten wird durch den Düsenkörper und den Grundkörper sowie durch die zum Aufnahmevolumen weisende Oberfläche des Adapterkolbens sowie durch den Bewegungsweg des Adapterkolbens ein Hubvolumen definiert, welches die je Hub über die Düsenöffnung ausgebrachte Einspritzmenge an Spritzgießmaterial vorgibt bzw. definiert.

Vermittels der Adaptereinrichtung wird es sonach ermöglicht, das "Arbeitsvolumen" welches bei einer, insbesondere unveränderten, axialen Bewegung der Schnecke appliziert wird bzw. über eine Düsenöffnung ausgebracht wird, im Vergleich zu einem ohne Adaptereinrichtung arbeitenden Betriebszustand der Spritzgießmaschine zu verändern, insbesondere zu reduzieren. Folglich kann durch die Anordnung einer entsprechenden Adaptereinrichtung der Arbeitsbereich hinsichtlich der möglichen Volumina eines zu spritzgießenden Bauteils erweitert werden. Dabei ist ein Ausbau bzw. ein Austausch der Schnecke nicht notwendig, da, insbesondere ausschließlich, durch die Adaptereinrichtung eine Anpassung des Arbeitsvolumens, insbesondere des Hubvolumens, zur Einstellung der Menge des je Hub auszubringenden Spritzgießmaterials erfolgt bzw. ausführbar ist.

Die Schnecke kann beispielsweise aus einem Vollmaterial bzw. als Vollmaterialschnecke ausgebildet sein. D. h. z. B., dass die Schnecke selbst keinen Hohlraum zur Aufnahme eines Kolbens umfasst und damit insbesondere keinen Hohlschnecke bildet. Insbesondere weist die Schnecke keinen Hohlraum für einen Hubkolben zum Applizieren von Spritzgießmaterial vermittels einer, bevorzugt axialen, Relativbewegung von Schnecke und Kolben auf. Die Ausbringung von Spritzgussmaterial kann durch eine gemeinsame axiale Bewegung von Schnecke und Adapterkolben erfolgen, sodass durch die Verwendung und/oder durch die Wahl eines bestimmten Adapterkolbens und dessen Befestigung an er Schnecke, während einer gemeinsamen axialen Bewegung von Schnecke und Adapterkolben, ein Arbeitshub bzw. ein Arbeitsvolumen an Spritzgießmaterial, appliziert werden.

Beispielsweise kann vermittels der vorliegenden Adaptereinrichtung eine Vorrichtung, welche eine Schnecke mit einem Durchmesser von 16 bis 22 mm aufweist und ein Schussgewicht pro Hub von mehr als 10 g, bevorzugt von mehr als 15 g (z. B. im Bereich von 10 bis 30 g), hat, ohne Tausch der Schnecke und durch Verwendung der Adaptereinrichtung auf ein Schussgewicht von 0,5 bis 10 g, bevorzugt auf ein Schussgewicht von 1,0 bis 8 g, besonders bevorzugt auf ein Schussgewicht von 1,5 bis 6 g, reduziert werden.

In einer vorteilhaften Ausführungsform kann es vorgesehen sein, dass vermittels der Adaptereinrichtung eine Reduzierung des Durchmessers eines axial bewegten, das plastifizierte Spritzgießmaterial ausbringenden Mittels derart erfolgt, dass der Durchmesser der Aufnahmeöffnung des Grundkörpers zur Aufnahme des Adapterkolbens zu dem Durchmesser der Aufnahmekammer des Aufnahmekörpers zur Aufnahme der Schnecke einen Faktor im Bereich von 0,40 bis 0,95, bevorzugt von 0,50 bis 0,90, besonders bevorzugt von 0,55 bis 0,85, höchst bevorzugt von 0,60 bis 0,80, aufweist. Mit anderen Worten erfolgt durch die Verwendung der Adaptereinrichtung eine Reduzierung des wirksamen Durchmessers für ein Ausbringmittel, d. h. des Durchmessers der Schnecke auf den Durchmesser des Adapterkolbens im Bereich von 5 % bis 65 %, bevorzugt im Bereich von 6,5 % bis 55 %, besonders bevorzugt im Bereich von 8,0 % bis 50 %, weiter bevorzugt von 10 % bis 35 %, des Durchmessers der Aufnahmekammer zur Aufnahme der Schnecke. Alternativ kann eine Reduzierung des effektiven Durchmessers von maximal 65 %, bevorzugt von maximal 55 %, besonders bevorzugt von maximal 45 %, höchst bevorzugt von maximal 35 %, des Durchmessers der Aufnahmekammer zur Aufnahme der Schnecke erfolgen.

Es ist möglich, dass der Adapterkolben wenigstens einen Durchgangsbereich, insbesondere wenigstens eine kanalartige bzw. -förmige Durchgangsöffnung, aufweist, über welchen plastifiziertes Spritzgießmaterial aus dem Aufnahmekörper in das definierte Aufnahmevolumen strömbar ist. Der Durchgangsbereich dient dazu, das plastifizierte Spritzgießmaterial von einem der Schnecke zugewandten Zwischenraum von Adapterkolben und der die Aufnahmeöffnung des Grundkörpers definierenden Wandung einerseits und andererseits dem Aufnahmevolumen bzw. einem der Schnecke abgewandten Seite des Adapterkolbens zu überführen bzw. zu bewegen. Insbesondere kann durch den Durchgangsbereich ein der Schnecke zugewandter Ringspalt bzw. Ringraum spritzgießmaterialüberführend mit einem der Schnecke abgewandten Seite des Adapterkolben verbunden sein. Insbesondere kann der Adapterkolben einen Gleitabschnitt bzw. einen Lagerabschnitt umfassen, der eine gleitende Lagerung des Adapterkolbens, insbesondere im Bereich, bevorzugt ausschließlich, mit dem Grundkörper ermöglicht. Dieser Gleitabschnitt kann beispielsweise als ringförmige Verdickung bzw. als eine ringförmige Erhebung des Adapterkolbens ausgebildet sein. Um diese, beispielsweise eine zylindrische, insbesondere eine kreiszylindrische, Mantelfläche des Gleitabschnitts nicht zu unterbrechen, kann der Durchgangsbereich als Durchgangskanal ausgebildet sein, der zwei über den Gleitabschnitt getrennte Oberflächenabschnitte des Adapterkolbens miteinander verbindet. Bevorzugt ist der Durchgangsbereich zumindest abschnittsweise, bevorzugt überwiegend, besonders bevorzugt gänzlich, geradlinig ausgebildet. Sofern der Durchgangsbereich zumindest abschnittsweise geradlinig ausgebildet ist, kann dessen geradliniger Verlauf einen Winkel mit der Längsachse des Adapterkolbens einschließen, bevorzugt beträgt der zwischen Längsachse des Adapterkolbens und des geradlinigen Verlaufs des Durchgangsbereichs einbeschriebene Winkel 5° bis 85°, bevorzugt 20° bis 70°, besonders bevorzugt 30° bis 60°, höchst bevorzugt 35° bis 55°, weiter bevorzugt 40° bis 50°.

In dem wenigstens einen Durchgangsbereich kann beispielsweise eine Rückstromsperreinrichtung zugeordnet sein. Diese kann eingerichtet sein, ein Durchströmen von plastifiziertem Material nur in eine Bewegungsrichtung, insbesondere in die zum Düsenkörper führenden Richtung freizugeben und in eine entgegen dem Düsenkörper gerichtete Richtung zu verhindern. Hierbei ist die Bewegungsrichtung relativ zu dem Adapterkolben zu betrachten. Beispielsweise weist die Rückstromsperreinrichtung wenigstens ein Rückstromsperrelement auf, welches in wenigstens eine erste Ausrichtung und/oder Position überführbar ist, in welcher es ein Durchströmen des Durchgangsbereichs mit plastifiziertem Spritzgießmaterial sperrt, und in wenigstens eine zweite Ausrichtung und/oder Position überführbar ist, in welcher es ein Durchströmen des Durchgangsbereichs mit plastifiziertem Spritzgießmaterial nicht sperrt. Dabei führt das Rückstromsperrelement vorzugsweise eine in seiner maximalen Bewegung begrenzte Relativbewegung relativ zu dem Hauptkörper des Adapterkolbens aus. Bevorzugt kann die Endlage des Rückstromsperrelement aufgrund von Sperrgeometrien in zumindest eine Bewegungsrichtung begrenzt sein, bevorzugt sind beide Endlagen bzw. beiden Bewegungsrichtungen des Rückstromsperrelements durch Sperrgeometrien begrenzt, sodass das Rückstromsperrelement verliersicher in oder an dem Adapterkolben gelagert ist. Mit anderen Worten kann ein Sicherungselement vorgesehen sein, welches eingerichtet ist, das wenigstens eine Rückstromsperrelement verliersicher an dem Adapterkolben anzuordnen.

Das wenigstens eine Rückstromsperrelement kann beispielsweise als ein, insbesondere kugelförmiger, Rückstromkörper ausgebildet sein, welcher in Richtung der ersten Ausrichtung und/oder Position, insbesondere kraftbeaufschlagt, weiter insbesondere federkraftbeaufschlagt, an oder in dem Adapterkolben angeordnet oder ausgebildet ist. Die Kraftbeaufschlagung kann vorzugsweise vermittels einem Vorspanmittel erfolgen, z. B. einem Federkörper.

Die grundkörperseitige Befestigungsschnittstelle kann beispielsweise als Befestigungsflansch ausgebildet sein oder einen solchen umfassen, über welchen der Gehäusekörper an oder im Bereich eines freien Endes der Aufnahmekammer befestigbar ist. Es kann sich als vorteilhaft erweisen, wenn der Grundkörper, insbesondere die grundkörperseitige Befestigungsschnittstelle, eine Zentrier- und/oder Führungsstruktur aufweist, welche mit einer Gegenzentrierungs- und/oder Gegenführungsstruktur des Aufnahmekörpers korrespondiert, derart, dass im Zuge eines Zusammensetzens des Grundkörpers mit dem Aufnahmekörper eine definierte Relativposition von Grundkörper und Aufnahmekörper sich ergibt. Insbesondere erfolgt eine gezielte bzw. vordefinierte koaxiale Ausrichtung der grundkörperseitigen Aufnahmeöffnung und einem aufnahmekörperseitigen Aufnahmeraum zur Aufnahme der Schnecke. Über die Befestigungsschnittstelle kann der Gehäusekörper und die Adaptereinrichtung bzw. der Gehäusekörper und der Grundkörper der Adaptereinrichtung eine kraft- und/oder formschlüssige Verbindung eingehen. Beispielsweise wird die Adaptereinrichtung, insbesondere der Grundkörper der Adaptereinrichtung, vermittels einer Klemmverbindung und/oder einer Schraubverbindung lösbar an dem Gehäusekörper befestigt bzw. ist entsprechend befestigbar.

Die grundkörperseitige Befestigungsschnittstelle oder der Befestigungsflansch kann beispielsweise einen Formschlussabschnitt aufweisen, welcher eingerichtet ist, mit wenigstens einem korrespondierenden, an oder im Bereich eines freien Endes der Aufnahmekammer angeordneten oder ausgebildeten Gegenformschlussabschnitt formschlüssig zusammenzuwirken. Durch eine derartige Ausgestaltung der Befestigungsschnittstelle kann auf einfache und komfortable Weise eine Abdichtung und/oder eine gezielte Relativausrichtung der beiden Verbindungspartner erreicht werden. Insbesondere kann ein fehlerhafter Zusammenbau verhindert werden. Optional kann an der Befestigungsschnittstelle, insbesondere im Bereich des Formschlussabschnitts, wenigstens ein Dichtmittel, insbesondere ein Dichtring angeordnet sein, sodass im zusammengesetzten Zustand der Verbindungspartner eine abgedichtete Verbindung erzeugbar ist bzw. erzeugt wird.

Der Düsenkörper kann beispielsweise wenigstens eine Befestigungsschnittstelle aufweisen, über welche der Düsenkörper an dem Grundkörper befestigbar oder befestigt ist. Hierbei kann der Düsenkörper bevorzugt lösbar, d. h. zerstörungsfrei lösbar, mit dem Grundkörper verbunden oder verbindbar sein. Bevorzugt kann der Düsenkörper kraft- oder formschlüssig mit dem Grundkörper verbunden werden. Alternativ kann der Düsenkörper einstückig mit dem Grundkörper ausgebildet sein.

Es ist möglich, dass ein aus dem definierten Aufnahmevolumen über die Austrittsöffnung in einem Hub des Adapterkolbens ausgebrachtes Spritzgießmaterial ein Volumen zwischen 0,5 und 20 cm³, bevorzugt zwischen 1 und 10 cm³, besonders bevorzugt zwischen 1 und 7 cm³, weiter bevorzugt zwischen 1 und 5 cm³, aufweist. Bevorzugt kann das Hubvolumen 1 bis 10 cm³ betragen und ist dabei innerhalb des Aufnahmevolumens angeordnet. Mit anderen Worten beträgt das Einspritzvolumen des Spritzmaterials, das über die Austrittöffnung austritt, je Hub des Adapterkolbens 0,5 und 20 cm³, bevorzugt zwischen 1 und 10 cm³, besonders bevorzugt zwischen 1 und 7 cm³, weiter bevorzugt zwischen 1 und 5 cm³. Sonach wird bei Einsatz der erfindungsgemäßen Adaptereinrichtung ein entsprechend kleines Einspritzvolumen ermöglicht, wohingegen die hierbei verwendete Spritzgießmaschine ohne den erfindungsgemäßen Adapter eine größere Einspritzmenge ausbringt bzw. für größere Ausbringvolumina ausgelegt ist. Bevorzugt überschneiden sich die Bereiche des mit und ohne Adaptereinrichtung ermöglichten Einspritzvolumens an Spritzgießmaterial.

In einer vorteilhaften Ausführungsform ist es vorgesehen, dass die Schnecke und/oder der Adapterkolben bewegbar zwischen einer ersten Position, welche mit einer Einspritzposition, in welcher plastifiziertes Spritzgießmaterial in eine Formwerkzeugkavität eines Spritzgießwerkzeugs einbringbar ist, korreliert, und einer zweiten Position, welche mit einer Nicht-Einspritzposition, in welcher kein plastifiziertes Spritzgießmaterial in eine Formwerkzeugkavität eines Spritzgießwerkzeugs einbringbar ist, korreliert, gelagert ist. Dabei kann es vorgesehen sein, dass die Schnecke über Lagerbereiche der Schnecke gleitend innerhalb der Aufnahmekammer des Aufnahmekörpers gelagert ist. Beispielsweise gleitet der Lagerbereich der Schnecke an einer Innenwandung der Aufnahmekammer des Aufnahmekörpers. Damit kann es sich ergeben, dass die Schnecke unmittelbar über deren Lagerbereich in gleitenden Kontakt mit einer Innenwandung der Aufnahmekammer und der Adapterkolben über dessen Lagerabschnitt in gleitenden Kontakt mit einer Innenwandung der Aufnahmeöffnung des Grundkörpers der Adaptereinrichtung steht. Mit anderen Worten ist die Schnecke gleitend an der Innenwandung der Aufnahmekammer des Aufnahmekörpers und der Adapterkolben gleitend und drehbar an der Innenwandung der Aufnahmeöffnung des Grundkörpers gelagert.

Neben der Spritzgießanordnung betrifft die Erfindung auch eine Adaptereinrichtung zur Einstellung eines in eine Formwerkzeugkavität eines Spritzgießwerkzeugs einzuspritzende Menge an Spritzgießmaterial für eine hierin beschriebene Spritzgießanordnung. Dabei weist die Adaptereinrichtung einen Grundkörper auf, welcher wenigstens eine Befestigungsschnittstelle aufweist, über welche er an dem Aufnahmekörper befestigbar oder befestigt ist, wobei in dem Grundkörper wenigstens eine Aufnahmeöffnung zur Aufnahme eines an der Schnecke befestigbaren oder befestigten Adapterkolbens ausgebildet ist. Bevorzugt ist der Adapterkolben gleitend an einer Innenwandung der Aufnahmeöffnung abgestützt bzw. gelagert. Ferner umfasst die Adaptereinrichtung einen in der wenigstens einen Aufnahmeöffnung aufnehmbaren oder aufgenommenen Adapterkolben, welcher wenigstens eine Befestigungsschnittstelle aufweist, über welche der Adapterkolben an der Schnecke befestigbar oder befestigt ist. Bevorzugt ist der Adapterkolben an der dem Düsenkörper zugewandten Stirnseite der Schnecke kraft- und/oder stoff- und/oder formschlüssig verbunden. Alternativ oder zusätzlich kann der Adapterkolben lösbar, d. h. zerstörungsfrei lösbar, mit der Schnecke verbunden sein, z. B. vermittels einer Schraubverbindung, wobei der Adapterkolben und/oder die Schnecke entsprechende Gewindeabschnitte zur Schraubverbindung aufweist bzw. aufweisen. Bevorzugt ist eine Wendelung bzw. die Form der spiralförmigen Vortriebsabschnitte der Schnecke für einen aufgrund einer Rotationsbewegung der Schnecke erfolgenden Vortrieb eines plastifizierten Spritzgussmaterials derart mit einem zur stirnseitigen Befestigung eines Adapterkolbens ausgelegten Gewindeverbindung ausgelegt, dass die Vortriebbewegung der Schnecke in eine der Einschraubbewegung des Adapterkolbens an die Schnecke entgegengesetzt ist. Damit wird verhindert, dass während der bestimmungsgemäßen Rotation der Schnecke zum Vortrieb des plastifizierten Spritzgussmaterials sich aufgrund dieser Rotationsbewegung die Schraubverbindung zwischen Adapterkolben und Schnecke löst.

Auch umfasst die Adaptereinrichtung einen an dem Grundkörper angeordneten oder ausgebildeten, wenigstens eine, insbesondere düsenartige bzw. -förmige, Austrittsöffnung aufweisenden Düsenkörper, wobei der Düsenkörper und der Adapterkolben ein definiertes Aufnahmevolumen für eine über die Austrittsöffnung in eine Formwerkzeugkavität eines Spritzgießwerkzeugs einzuspritzende Menge an Spritzgießmaterial begrenzen. Typischerweise wird in dem Aufnahmevolumen eine Menge Spritzgießmaterial bereitgehalten, wobei eine Teilmenge dieser Menge im Zuge der axialen Hubbewegung der Schnecke und dem an der Schnecke angeordneten Adapterkolben aus der Austrittsöffnung des Düsenkörpers austritt. Durch die Hubbewegung des Adapterkolbens wird ein im Nahbereich der der Düsenöffnung zugewandten Fläche des Adapterkolbens vorliegendes Spritzgussmaterials in Richtung der Düsenöffnung gedrückt und damit das zwischen diesem Spritzgussmaterial und der Düsenöffnung vorliegende Spritzgussmaterial aus der Düsenöffnung herausgedrückt.

Ferner betrifft die Erfindung auch eine Spritzgießmaschine, umfassend eine hierin angeordnete Spritzgießanordnung. Es ist möglich, dass die Spritzgießmaschine bzw. eine die Spritzgießmaschine umfassende Anordnung wenigstens zwei unterschiedliche Adaptereinrichtungen umfasst, sodass wahlweise bzw. wechselweise die Spritzgießmaschine in einer ersten Konfiguration ohne eine Adaptereinrichtung, in einer zweiten Konfiguration, in welcher die Spritzgießmaschine mit einer ersten Adaptereinrichtung ausgestattet ist und in einer dritten Konfiguration, in welcher die Spritzgießmaschine mit einer zweiten Adaptereinrichtung ausgestattet ist, betrieben werden. In den jeweiligen Konfigurationen ist die Spritzgießmaschine auf unterschiedliche Volumina an Ausspritzmaterial je Hub der Schnecke ausgelegt. Sonach kann eine optimierte Einrichtung der Spritzgießmaschine in Abhängigkeit der gewünschten Ausbringmenge von Spritzgießmaterial erfolgen.

Sämtliche Vorteile, Einzelheiten, Ausführungen und/oder Merkmale der erfindungsgemäßen Spritzgießanordnung und ihren Ausführungsformen und Konkretisierungen sind auch auf die erfindungsgemäße Adaptereinrichtung sowie die erfindungsgemäße Spritzgießmaschine übertragbar bzw. anzuwenden und umgekehrt.

Die Erfindung ist anhand von Ausführungsbeispielen in den Zeichnungen näher erläutert. Dabei zeigt:
- Fig. 1: eine schematische Vollschnittdarstellung einer Spritzgießanordnung, in welcher ein Adapterkolben und eine Schnecke in einer ersten, ausgefahrenen Position (obere Abbildung) und in einer zweiten, zurückgefahrenen Position (untere Abbildung) dargestellt ist gemäß einem Ausführungsbeispiel;
- Fig. 2: eine schematische Vollschnittdarstellung einer Spritzgießanordnung, in welcher ein Adapterkolben und eine Schnecke in einer ersten, ausgefahrenen Position (obere Abbildung) und in einer zweiten, zurückgefahrenen Position (untere Abbildung) dargestellt ist gemäß einem weiteren Ausführungsbeispiel;
- Fig. 3: eine Detaildarstellung gemäß Detail A aus Figur 1 einer in einem Durchgangsbereich angeordneten Rückstromsperreinrichtung;
- Fig. 4: eine schematische perspektivische Darstellung einer Adaptereinrichtung in einem von dem Aufnahmekörper demontierten Zustand gemäß einem Ausführungsbeispiel.

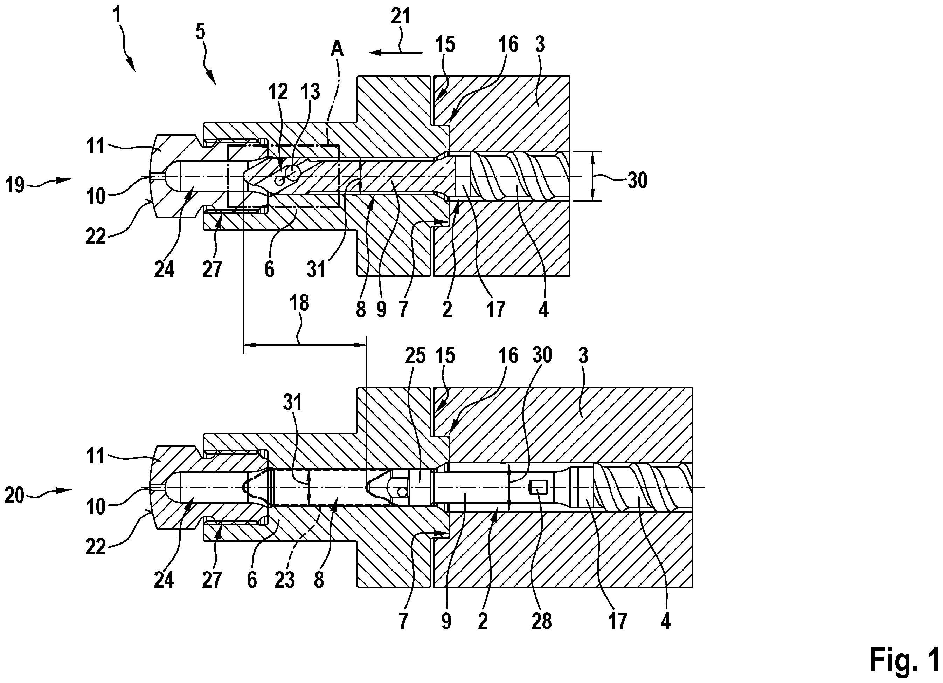

In Figur 1 ist eine Spritzgießanordnung 1 dargestellt. Ein Aufnahmekörper 3 einer Spritzgießmaschine weist dabei eine zylinderartige bzw. -förmige, insbesondere eine kreiszylindrische, Aufnahmekammer 2 auf, wobei eine Schnecke 4 in dem Aufnahmekörper 3 angeordnet ist bzw. anordenbar ist. Die Schnecke 4 ist derart gelagert, dass diese sowohl eine rotatorische wie auch eine translatorische Bewegung relativ zu dem Aufnahmekörper 3 ausführen kann. Über die rotatorische Bewegung kann ein Vorschub bzw. ein Vortrieb von plastifiziertem Spritzgießmaterial erfolgen, wobei in der dargestellten Ausführungsform das plastifizierte Spritzgießmaterial in Richtung des Pfeils 21 bewegt wird. Über eine translatorische Bewegung der Schnecke 4, welche im Vergleich der unteren und oberen Abbildung der Figur 1 ersichtlich und visuell als Hub 18 kenntlich gemacht ist, wird eine weitere Förderung des plastifizierten Spritzgießmaterials erreicht.

An dem Aufnahmekörper 3 ist eine Adaptereinrichtung 5 anordenbar oder angeordnet, die dazu genutzt wird, eine Einstellung eines in eine Formwerkzeugkavität (nicht dargestellt) eines Spritzgießwerkzeugs einzuspritzenden Menge an Spritzgießmaterial auszuführen. Die Adaptereinrichtung 5 weist dabei einen Grundkörper 6 auf, welcher wenigstens eine Befestigungsschnittstelle 7 aufweist, über welche er an dem Aufnahmekörper 3 befestigbar oder befestigt ist. In dem Grundkörper 6 ist wenigstens eine, bevorzugt zylindrische oder zylinderartige, besonders bevorzugt eine kreiszylindrische, Aufnahmeöffnung 8 zur Lagerung eines an der Schnecke 4 befestigbaren oder befestigten Adapterkolbens 9 ausgebildet. Dabei kann im angesetzten Zustand der Adaptereinrichtung 5 an dem Grundkörper 6, die Aufnahmeöffnung 8 koaxial zu der Aufnahmekammer 2 des Aufnahmekörpers 3 ausgerichtet sein und/oder diesen fortsetzen.

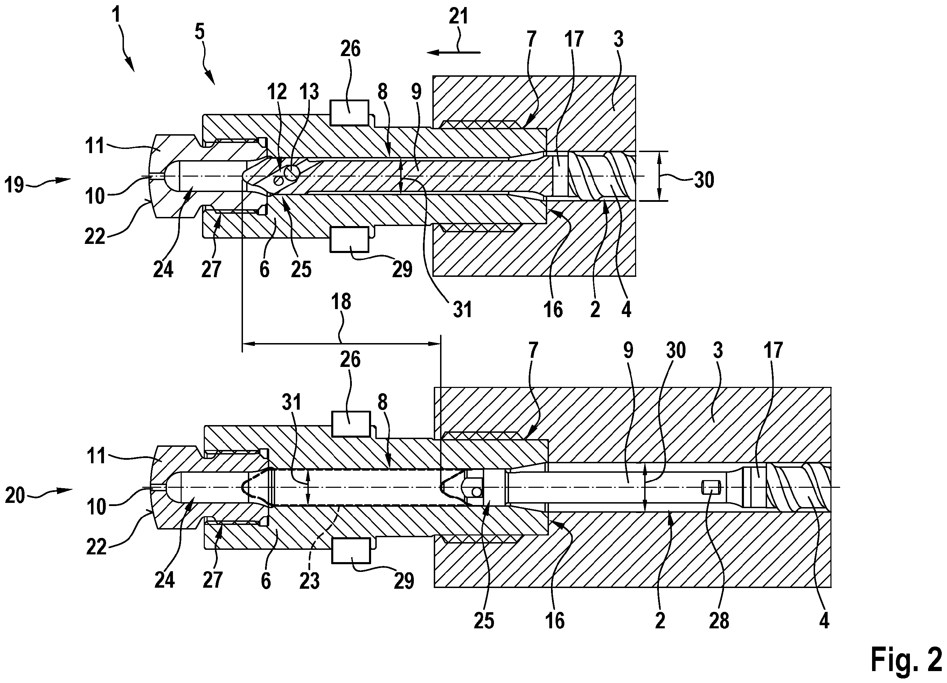

Die den Grundkörper 6 und den Aufnahmekörper 3 verbindende Befestigungsschnittstelle 7 kann zumindest abschnittsweise, bevorzugt überwiegend, besonders bevorzugt vollständig, über eine radial ausgerichtete Oberfläche und/oder zumindest abschnittsweise, bevorzugt überwiegend, besonders bevorzugt ausschließlich, über eine axial ausgerichtete Oberfläche eine kraft- und/oder stoff- und/oder formschlüssige Verbindung ausbilden. So weist der Grundkörper 6 gemäß der in Figur 2 gezeigten Ausführungsform ein an seiner Außenoberfläche ausgebildetes Außengewinde auf, welches mit einem, in ein in einer den Grundkörper 6 zumindest abschnittsweise aufnehmenden Ausnehmung ausgebildeten Innengewinde eingreift.

Die Adaptereinrichtung 5 umfasst ferner einen in der wenigstens einen Aufnahmeöffnung 8 lagerbaren oder gelagerten Adapterkolben 9, welcher wenigstens eine Befestigungsschnittstelle 17 aufweist, über welche der Adapterkolben 9 an der Schnecke 4 befestigbar oder befestigt ist. Der Adapterkolben 9 kann beispielsweise eine stabförmige oder stabartige Form aufweisen. Bevorzugt sind der Adapterkolben 9 und die Schnecke 4 parallel, besonders bevorzugt koaxial, zueinander im montierten Zustand ausgerichtet.

Zudem umfasst die Adaptereinrichtung 5 einen Düsenkörper 11, der an dem Grundkörper 6 angeordnet oder ausgebildet ist, wobei der Düsenkörper 11 wenigstens eine, insbesondere düsenartige bzw. -förmige, Austrittsöffnung 10 aufweist. Über die Austrittsöffnung 10 des Düsenkörpers 11 wird das plastifizierte Spritzgießmaterial während der translatorischen Zustellbewegung bzw. während des Ausführens des Hubs 18 der Schnecke 4 und des Adapterkolbens 9 aus der Adaptereinrichtung 5 herausgedrückt und in die Formwerkzeugkavität eines Spritzgießwerkzeugs eingebracht bzw. eingespritzt. Hierzu kann das Spritzgießwerkzeug mit einer, insbesondere konkaven oder konvexen, Anlagefläche 22 des Düsenkörpers 11 in kontaktgebracht werden. Alternativ oder zusätzlich kann das Spritzgießwerkzeug einen Übergabekanal (nicht dargestellt) mit einer Übergabeöffnung (nicht dargestellt) aufweisen, die in eine spritzgießmaterialübertragende Verbindung mit der Austrittsöffnung 10 des Düsenkörpers 11 bringbar ist.

Der Düsenkörper 11 und der Adapterkolben 9 begrenzen ein definiertes Aufnahmevolumen für eine über die Austrittsöffnung 10 in eine Formwerkzeugkavität eines Spritzgießwerkzeugs einzuspritzende Menge an Spritzgießmaterial. In der unteren Abbildung der Figur 1 wird ein Hubvolumen 23 bzw. ein Hubraum des Adapterkolbens 9 innerhalb der Aufnahmeöffnung 8 des Grundkörpers 6 dargestellt. Dieses Hubvolumen 23 bzw. dieser Hubraum wird durch die maximale Bewegbarkeit des Adapterkolbens 9 während dessen translatorischer Bewegung, die durch die translatorische Bewegung der Schnecke 4 initiiert wird, mit beeinflusst. Dieses Hubvolumen 23 entspricht der Menge an plastifizierten Spritzgießmaterial, das pro Hub aus der Austrittsöffnung 10 ausgebracht wird. Dabei wird das in einem vorderen (d. h. z. B. das in einem der Austrittsöffnung 11 zugewandten) Abschnitt 24 der Aufnahmeöffnung 8 befindliche plastifizierte Spritzgießmaterial durch das im Nahbereich des Adapterkolbens 9 befindliche und durch die Bewegung des Adapterkolbens 9 weggedrückte Spritzgießmaterial herausgedrückt. Mit anderen Worten wird die Menge an Spritzgießmaterial, welches sich im vorderen Abschnitt 24 der Aufnahmeöffnung 8 befindet, pro Hub durch das Hubvolumen 23 eingestellt. Das Hubvolumen 23 wird dabei durch die Form und Dimensionierung des Adapterkolbens 9 und die Form und Dimensionierung der Aufnahmeöffnung 8 sowie durch die Strecke der Bewegung des Adapterkolbens 9 bestimmt.

Dadurch, dass in der vorliegenden Ausführungsform der Adapterkolben 9 nicht gänzlich in die Aufnahmeöffnung 8 des Grundkörpers 6 bzw. nicht gänzlich in den vorderen Abschnitt 24 der Aufnahmeöffnung 8 bei seinem maximalen Hub 18 eindringt, verbleibt je Hub 18 eine Teilmenge an plastifiziertem Spritzgießmaterial, das ggf. im Zuge den darauffolgenden Hubs 18 über die Austrittsöffnung 10 des Düsenkörpers 11 ausgebracht wird. Optional ist es möglich, den Adapterkolben 9 vollständig in das Aufnahmevolumen des Grundkörpers 6 bzw. des Düsenkörpers 11 einzufahren, sodass kein oder nur ein minimales plastifiziertes Spritzgießmaterial in der Adaptereinrichtung zurückbleibt, wenn ein Hub 18 vollständig ausgeführt wird.

Der Adapterkolben 9 kann beispielsweise wenigstens einen Durchgangsbereich 12 aufweisen. Der Durchgangsbereich 12 kann wenigstens eine kanalartige bzw. -förmige Durchgangsöffnung umfassen. Über die Durchgangsöffnung kann plastifiziertes Spritzgießmaterial aus dem Aufnahmekörper 3 in das definierte Aufnahmevolumen strömen. Der Adapterkolben 9 kann einen Lagerabschnitt 25 umfassen, vermittels welchem der Adapterkolben 9 innerhalb der Aufnahmeöffnung 8 gleitend gelagert ist. Hierzu kann der Adapterkolben 9 bevorzugt eine seinen Außenumfang zumindest einmal um 360°, insbesondere lückenlos, umgebende Gleitflächenstruktur aufweisen, sodass der Adapterkolben 9 in radialer Richtung durch die Gleitflächenstruktur an der Innenwandung der Aufnahmeöffnung 8 zumindest teilweise, bevorzugt vollständig, berührend gelagert ist. Aufgrund dieser durch den Lagerabschnitt 25 bedingten, insbesondere senkrecht zur Längsachse des Adapterkolbens 9 verlaufenden, Trennebene ermöglicht der Durchgangsbereich 12 einen Transport von plastifiziertem Spritzgießmaterial von einer der Schnecke 4 zugewandten Seite des Lagerabschnitts 25 zu einer der Schnecke 4 abgewandten Seite des Lagerabschnitts 25, ohne dass es zu einer Beeinträchtigung der Lagerfunktion des Lagerabschnitts 25 kommt.

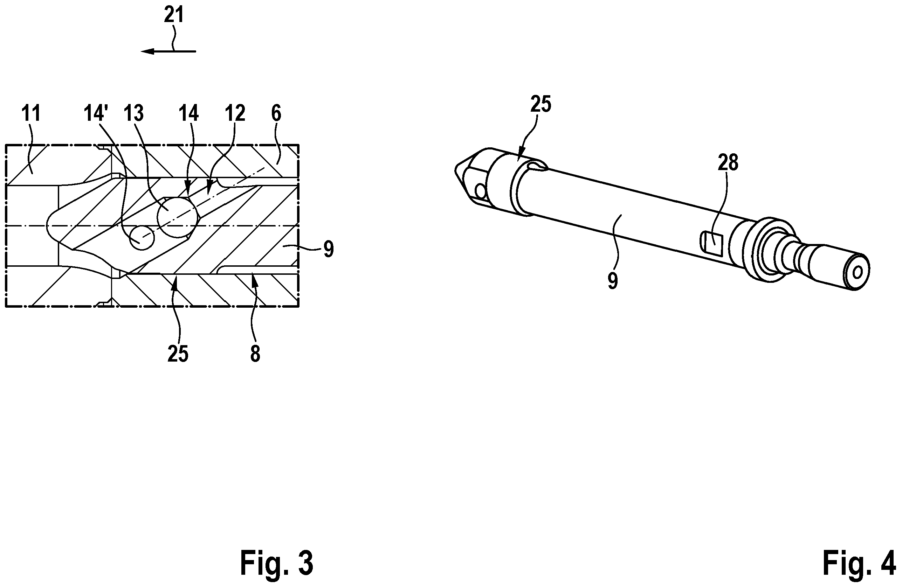

Dem wenigstens einen Durchgangsbereich 12 kann beispielsweise eine Rückstromsperreinrichtung zugeordnet sein. Die Rückstromsperreinrichtung kann beispielsweise wenigstens ein Rückstromsperrelement 13 aufweisen, welches in wenigstens eine erste Ausrichtung und/oder Position überführbar ist, in welcher es ein Durchströmen des Durchgangsbereichs 12 mit plastifiziertem Spritzgießmaterial sperrt, und in wenigstens eine zweite Ausrichtung und/oder Position überführbar ist, in welcher es ein Durchströmen des Durchgangsbereichs 12 mit plastifiziertem Spritzgießmaterial nicht sperrt. In der in Figur 3 dargestellten Detailansicht der Rückstromsperreinrichtung ist das Rückstromsperrelement 13 in seiner Sperrposition, also in seiner Position gezeigt, in welcher kein plastifiziertes Material durch den Durchgangsbereich 12 hindurchtreten kann, sodass bei einer Bewegung des Adapterkolbens 9 in Richtung des Pfeils 21, ein hoher Druck auf der der Austrittsöffnung zugewandten Seite des Adapterkolbens 9 erzeugbar ist.

Optional kann das wenigstens eine Rückstromsperrelement 13 als ein, insbesondere kugelförmiger, Rückstromkörper ausgebildet sein, welcher in Richtung der ersten Ausrichtung und/oder Position, insbesondere kraftbeaufschlagt, weiter insbesondere federkraftbeaufschlagt, an oder in dem Adapterkolben 9 angeordnet oder ausgebildet ist. Ein entsprechendes Federelement oder Vorspannmittel ist in den Figuren nicht dargestellt. Es ist möglich, dass die Rückstromsperreinrichtung wenigstens ein Sicherungselement 14, 14' aufweist, welches eingerichtet ist, das wenigstens eine Rückstromsperrelement 13 verliersicher an dem Adapterkolben 9 anzuordnen. In Figur 3 weist der den Durchgangsbereich 12 ausbildende Kanal einen verjüngten Bereich als erstes Sicherungselement 14 auf, der derart verjüngt ist, dass das Rückstromsperrelement 13 nicht hindurchtreten kann, sodass ein ringförmiger Anschlag für eine Bewegung des Rückstromsperrelements 13 ausgebildet wird. In der entgegengesetzten Bewegungsrichtung des Rückstromsperrelements 13 ist dieses am Ende des Bewegungswegs durch Kontakt mit einem ein weiteres Sicherungselement 14' bildenden Stiftkörper begrenzt. Optional ist das Rückstromsperrelement 13 und/oder wenigstens ein Sicherungselement 14, 14', bevorzugt sämtliche Sicherungselemente 14, 14`, innerhalb eines durch den Adapterkolben 9 definierten Hauptvolumen angeordnet oder ausgebildet, sodass die Außenabmessungen des Adapterkolbens 9 hierdurch nicht oder nicht wesentlich beeinträchtigt werden.

Die grundkörperseitige Befestigungsschnittstelle 7 kann beispielsweise als Befestigungsflansch 15 ausgebildet sein oder einen solchen umfassen, wobei über den Befestigungsflansch 15 der Grundkörper 6 an oder im Bereich eines freien Endes der Aufnahmekammer 2 befestigbar ist bzw. in oder an den den Aufnahmekanal 2 ausbildenden Aufnahmekörper 3 befestigbar ist.

Die grundkörperseitige Befestigungsschnittstelle 7 oder der Befestigungsflansch 15 kann beispielsweise einen Formschlussabschnitt 16 aufweisen, welcher eingerichtet ist, mit wenigstens einem korrespondierenden, an oder im Bereich eines freien Endes der Aufnahmekammer 2 angeordneten oder ausgebildeten Gegenformschlussabschnitt formschlüssig zusammenzuwirken. Der Gegenformschlussabschnitt kann beispielsweise in dem die Aufnahmekammer 2 ausbildenden bzw. die Aufnahmekammer 2 definierenden Aufnahmekörper 3 ausgebildet sein. Optional ist es möglich, dass in oder an der Befestigungsschnittstelle 7 oder in oder an dem Befestigungsflansch 15 ein Dichtmittel (nicht dargestellt) angeordnet oder anordenbar ist, derart dass dieses Dichtmittel im zusammengesetzten Zustand von Grundkörper 6 und Aufnahmekörper 3 dichtend auf den Trennbereich bzw. auf die Trennebene dieser beiden Verbindungspartner einwirkt.

Der Düsenkörper 11 kann beispielsweise wenigstens eine Befestigungsschnittstelle 27 aufweisen, (a) über welche der Düsenkörper 11 an dem Grundkörper 6 befestigbar oder befestigt ist, oder (b) wobei der Düsenkörper 11 einstückig mit dem Grundkörper 6 ausgebildet ist. So ist es möglich, dass der Grundkörper 6 einstückig mit dem Abschnitt ausgebildet ist, sodass der Grundkörper 6 die Austrittsöffnung 10 aufweist und damit den Düsenkörper 11 mit bildet. Die den Düsenkörper 11 an dem Grundkörper 6 befestigende Befestigungsschnittstelle 27 kann beispielsweise als Gewinde ausgebildet sein.

Ein aus dem definierten Aufnahmevolumen über die Austrittsöffnung 10 in einem Hub 18 des Adapterkolbens 9 bzw. der Baugruppe bestehend aus Adapterkolben 9 und Schnecke 4 ausgebrachte Spritzgießmaterial kann beispielsweise ein Volumen zwischen 0,5 und 20 cm³, bevorzugt zwischen 1 und 10 cm³, besonders bevorzugt zwischen 1 und 7 cm³, weiter bevorzugt zwischen 1 und 5 cm³, betragen. Dieses je Hub 18 unter Verwendung der Adaptereinrichtung 5 ausgebrachte Spritzgießmaterial kann beispielsweise ein Schussgewicht von 0,5 bis 10 g, bevorzugt 1,0 bis 8 g, besonders bevorzugt von 1,5 bis 6,0 g, höchst bevorzugt von 2,0 bis 5,0 g, aufweisen bzw. die genannten Schussgewichte können im Zuge eines stabilen Prozesses gefahren werden. Dies kann dabei trotz der Verwendung einer Schnecke 4 mit einem Durchmesser von beispielsweise 16 bis 22 mm erreicht werden. Üblicherweise kann diese Schnecke 4 und die diese aufnehmende Aufnahmekammer 2 bei einem Schneckendurchmesser von 16 bis 20 mm für Schussgewichte je Hub 18 bzw. für Ausbringmengen an plastifiziertem Spritzgießmaterial je Hub 18 von 10 bis 30 g ausgelegt sein, vermittels der erfindungsgemäßen Adaptereinrichtung 5 und deren Montage an den Aufnahmekörper 3 und an die Schnecke 4, kann das Schussgewicht je Hub 18 auf Werte unterhalb 10 g, bevorzugt unterhalb von 8 g; besonders bevorzugt unterhalb von 6 g, reduziert werden. Der Durchmesser 30 der die Schnecke 4 aufnehmenden Aufnahmekammer 2 des Aufnahmekörpers 3 ist kleiner als der Durchmesser 31 der Aufnahmeöffnung 8 der Adaptereinrichtung 5. So kann durch die Adaptereinrichtung 5 eine Reduzierung des pro Arbeitshub, d. h. pro axialer Vorschubbewegung der Schnecke 4, vorliegenden effektiven Hubraums erreicht werden.

Der Adapterkolben 9 und die den Adapterkolben 9 aufnehmende Aufnahmeöffnung 8 und die Relativbewegung von Adapterkolben 9 und der die Aufnahmeöffnung bildenden Grundkörper 6 können derart ausgelegt sein, dass das erzielte Hubvolumen den vorgenannten Volumenbereichen entspricht. Mit anderen Worten beträgt das Einspritzvolumen des Spritzmaterials je Hub des Adapterkolbens 9 Volumenwerte im Bereich von 0,5 bis 20 cm³, bevorzugt im Bereich von 1 bis 10 cm³, besonders bevorzugt im Bereich von 1 bis 7 cm³, weiter bevorzugt im Bereich von 1 bis 5 cm³.

Die Schnecke 4 und/oder der Adapterkolben 9 kann beispielsweise bewegbar zwischen einer ersten Position 19, welche mit einer Einspritzposition, in welcher plastifiziertes Spritzgießmaterial in eine Formwerkzeugkavität eines Spritzgießwerkzeugs einbringbar ist, korreliert, und einer zweiten Position 20, welche mit einer Nicht-Einspritzposition, in welcher kein plastifiziertes Spritzgießmaterial in eine Formwerkzeugkavität eines Spritzgießwerkzeugs einbringbar ist, korreliert, gelagert sein. Auf dem Verfahrweg der Schnecke 4 und/oder des Adapterkolbens 9 von der zweiten Position 20 in die erste Position wird das zwischen der Austrittöffnung 10 und dem Adapterkolben 9 befindliche plastifizierte Spritzgießmaterial aus der Austrittöffnung 10 herausgedrückt und in eine Formwerkzeugkavität eines Spritzgießwerkzeugs eingebracht. Diese Bewegung bzw. dieser Verfahrweg entspricht dem Hub 18, vgl. Figuren 1 und 2.

Auch betrifft die Erfindung eine Adaptereinrichtung 5 zur Einstellung eines in eine Formwerkzeugkavität eines Spritzgießwerkzeugs einzuspritzenden Menge an Spritzgießmaterial für eine Spritzgießanordnung 1 nach einem der vorhergehenden Ansprüche, wobei die Adaptereinrichtung 5 einen Grundkörper 6, aufweist, welcher wenigstens eine Befestigungsschnittstelle 7 umfasst, über welche er an dem Aufnahmekörper 3 befestigbar oder befestigt ist. In dem Grundkörper 6 ist wenigstens eine Aufnahmeöffnung 8 zur Aufnahme eines an der Schnecke 4 befestigbaren oder befestigten Adapterkolbens 9 ausgebildet. Dieser Adapterkolben 9 ist in der wenigstens einen Aufnahmeöffnung 8 aufnehmbar oder aufgenommen. Der Adapterkolben 9 weist wenigstens eine Befestigungsschnittstelle 17 auf, über welche der Adapterkolben 9 an der Schnecke 4 befestigbar oder befestigt ist. Auch umfasst die Adaptereinrichtung einen an dem Grundkörper 6 angeordneten oder ausgebildeten, wenigstens eine, insbesondere düsenartige bzw. -förmige, Austrittsöffnung 10 aufweisenden Düsenkörper 11, wobei der Düsenkörper 11 und der Adapterkolben 9 ein definiertes Aufnahmevolumen für eine über die Austrittsöffnung 10 in eine Formwerkzeugkavität eines Spritzgießwerkzeugs einzuspritzende Menge an Spritzgießmaterial begrenzen. Über das Aufnahmevolumen wird ein Volumen beschrieben, das zum Teil die Menge an Spritzgießmaterial bildet, welches pro Hub 18 über die Austrittöffnung 11 die Adaptereinrichtung verlässt und der Formwerkzeugkavität zugeführt wird.

Es ist möglich, dass in oder an der Adaptereinrichtung 5, insbesondere in oder an einem Grundkörper 6 der Adaptereinrichtung 5 und/oder in oder an einem Adapterkolben 9 der Adaptereinrichtung 5 und/oder in oder an dem Düsenkörper 11 der Adaptereinrichtung 5 wenigstens eine Erfassungseinrichtung 26 angeordnet ist, vgl. Figur 2. Die Erfassungseinrichtung 26 kann beispielsweise als eine wenigstens eine Temperatur und/oder wenigstens eine Vibration und/oder wenigstens eine eine Lage und/oder Ausrichtung des Adapterkolbens 9 erfassende Erfassungseinrichtung 26 ausgebildet sein. So kann beispielsweise durch die Erfassungseinrichtung 26 eine die Temperatur und/oder eine Vibration und/oder eine die Lage und/oder Ausrichtung des Adapterkolbens 9, insbesondere relativ zu einem Grundkörper 6, beschreibende Erfassungsinformation erzeugt werden. Eine derartige Erfassungsinformation kann z. B. einer übergeordneten Rechnereinheit zu Zwecken einer Dokumentation und/oder einer Prozesssteuerung des Spritzgießprozesses übermittelt werden. Sofern die wenigstens eine Erfassungseinrichtung 26 in oder an einem lösbar mit dem Grundkörper 6 verbundenem bzw. verbindbarem Düsenkörper 11 platziert ist, kann mit einem Wechsel des Düsenkörpers 11 gleichzeitig die Erfassungseinrichtung 26 gewechselt werden.

Optional kann der Grundkörper 6 und/oder der Adapterkolben 9 und/oder der Düsenkörper 11 wenigstens eine geometrische Angriffsschnittstelle 28 für eine drehmomentübertragende Verbindung des Grundkörpers 6 und/oder des Adapterkolbens 9 und/oder des Düsenkörpers 11 mit einem Werkzeug (nicht dargestellt) aufweisen. Vermittels dem Eingriff des Werkzeugs an der Angriffsschnittstelle 28 kann im Eingriffszustand mit dem Grundkörper 6 und/oder mit dem Adapterkolben 9 und/oder mit dem Düsenkörper 11 ein Drehmoment auf den Grundkörper 6 und/oder auf den Adapterkolben 9 und/oder den Düsenkörper 11 aufgebracht werden, welches zur Erzeugung einer aufgrund einer Drehbewegung erfolgenden Verbindung des Grundkörpers 6 mit dem Aufnahmekörper 3 bzw. des Adapterkolbens 9 mit der Schnecke 4 bzw. des Düsenkörpers 11 mit dem Grundkörper 6 genutzt werden kann. Die Angriffsschnittstelle 28 kann beispielsweise als eine Ausnehmung und/oder eine Hervorhebung an einer äußeren Oberfläche des Grundkörpers 6 bzw. des Adapterkolbens 9 bzw. des Düsenkörpers 11 ausgebildet sein. Beispielsweise ist die Angriffsschnittstelle 28 als zumindest abschnittsweise plan ausgebildete Angriffsoberflächen ausgebildet, die zum Ansetzen eines Maul- bzw. Gabelschlüssels eingerichtet sind, vgl. Figur 4. Typischerweise weisen Angriffsschnittstellen 28 zum Ansetzen eines Maul- oder Gabelschlüssels zwei zueinander parallele und jeweils plane Oberflächen auf, die in einer gemeinsamen und senkrecht zu einer Rotationsachse verlaufenden Ebene liegen. Wenigstens eine Angriffsschnittstelle 28 kann auch zum Ineingriffbringen mit anderen Antriebsgeometrien von Werkzeugen ausgebildet sein, so kann die Angriffsschnittstelle 28 eine Aufnahme zur drehmomentübertragenden Verbindung mit einem Kreuzschlitz oder einem Trox oder anderen Werkzeugantriebsgeometrien aufweisen.

Optional ist es möglich, dass in oder an dem Grundkörper 6 und/oder in oder an dem Adapterkolben 9 und/oder in oder an dem Düsenkörper 11 eine Temperiereinrichtung 29 angeordnet ist. Vermittels einer derartigen Temperiereinrichtung 29 kann eine Kühlung und/oder eine Erwärmung des die Adaptereinrichtung 5 durchlaufenden plastifizierten Spritzgießmaterials erfolgen. Hierzu können der Grundkörper 6 und/oder der Adapterkolben 9 und/oder der Düsenkörper 11 ein Temperierfluid durchführende Temperierkanäle (nicht dargestellt) und/oder wenigstens ein elektrisch bestrombares Temperierelement (nicht dargestellt) aufweisen.

### Bezugszeichenliste

- 1: Spritzgießanordnung
- 2: Aufnahmekammer
- 3: Aufnahmekörper
- 4: Schnecke
- 5: Adaptereinrichtung
- 6: Grundkörper von 5
- 7: Befestigungsschnittstelle zwischen 3 und 6
- 8: Aufnahmeöffnung von 6
- 9: Adapterkolben
- 10: Austrittsöffnung von 11
- 11: Düsenkörper
- 12: Durchgangsbereich
- 13: Rückstromsperrelement
- 14, 14': Sicherungselement
- 15: Befestigungsflansch
- 16: Formschlussabschnitt
- 17: Befestigungsschnittstelle zwischen 4 und 9
- 18: Hub
- 19: erste Position von 4 und/oder 9
- 20: zweite Position von 4 und/oder 9
- 21: Pfeil
- 22: Anlagefläche von 11
- 23: Hubvolumen
- 24: vorderer Abschnitt von 8
- 25: Lagerabschnitt
- 26: Erfassungseinrichtung
- 27: Befestigungsschnittstelle zwischen 6 und 11
- 28: Angriffsschnittstelle
- 29: Temperiereinrichtung
- 30: Durchmesser von 2
- 31: Durchmesser von 8

## Patentansprüche

1. Spritzgießanordnung (1), umfassend einen eine zylinderartige bzw. - förmige Aufnahmekammer (2) aufweisenden Aufnahmekörper (3) und eine in dem Aufnahmekörper (3) angeordnete Schnecke (4), **gekennzeichnet durch**
eine an dem Aufnahmekörper (3) anordenbare oder angeordnete Adaptereinrichtung (5) zur Einstellung eines in eine Formwerkzeugkavität eines Spritzgießwerkzeugs einzuspritzenden Menge an Spritzgießmaterial, wobei die Adaptereinrichtung (5) aufweist:
- einen Grundkörper (6), welcher wenigstens eine Befestigungsschnittstelle (7) aufweist, über welche er an dem Aufnahmekörper (3) befestigbar oder befestigt ist, wobei in dem Grundkörper (6) wenigstens eine Aufnahmeöffnung (8) zur Lagerung eines an der Schnecke (4) befestigbaren oder befestigten Adapterkolbens (9) ausgebildet ist,
- einen in der wenigstens einen Aufnahmeöffnung (8) lagerbaren oder gelagerten Adapterkolben (9), welcher wenigstens eine Befestigungsschnittstelle (17) aufweist, über welche der Adapterkolben (9) an der Schnecke (4) befestigbar oder befestigt ist,
- einen an dem Grundkörper (6) angeordneten oder ausgebildeten, wenigstens eine, insbesondere düsenartige bzw. -förmige, Austrittsöffnung (10) aufweisenden Düsenkörper (11), wobei der Düsenkörper (11) und der Adapterkolben (9) ein definiertes Aufnahmevolumen für eine über die Austrittsöffnung (10) in eine Formwerkzeugkavität eines Spritzgießwerkzeugs einzuspritzende Menge an Spritzgießmaterial begrenzen.

2. Spritzgießanordnung (1) nach Anspruch 1, **dadurch gekennzeichnet, dass** der Adapterkolben (9) wenigstens einen Durchgangsbereich (12), insbesondere wenigstens eine kanalartige bzw. -förmige Durchgangsöffnung, aufweist, über welchen plastifiziertes Spritzgießmaterial aus dem Aufnahmekörper (3) in das definierte Aufnahmevolumen strömbar ist.

3. Spritzgießanordnung (1) nach Anspruch 2, **dadurch gekennzeichnet, dass** dem wenigstens einen Durchgangsbereich (12) eine Rückstromsperreinrichtung zugeordnet ist.

4. Spritzgießanordnung (1) nach Anspruch 3, **dadurch gekennzeichnet, dass** die Rückstromsperreinrichtung wenigstens ein Rückstromsperrelement (13) aufweist, welches in wenigstens eine erste Ausrichtung und/oder Position überführbar ist, in welcher es ein Durchströmen des Durchgangsbereichs (12) mit plastifiziertem Spritzgießmaterial sperrt, und in wenigstens eine zweite Ausrichtung und/oder Position überführbar ist, in welcher es ein Durchströmen des Durchgangsbereichs (12) mit plastifiziertem Spritzgießmaterial nicht sperrt.

5. Spritzgießanordnung (1) nach Anspruch 4, **dadurch gekennzeichnet, dass** das wenigstens eine Rückstromsperrelement (13) als ein, insbesondere kugelförmiger, Rückstromkörper ausgebildet ist, welcher in Richtung der ersten Ausrichtung und/oder Position, insbesondere kraftbeaufschlagt, weiter insbesondere federkraftbeaufschlagt, an oder in dem Adapterkolben (9) angeordnet oder ausgebildet ist.

6. Spritzgießanordnung (1) nach Anspruch 4 oder 5, **gekennzeichnet durch** ein Sicherungselement (14, 14'), welches eingerichtet ist, das wenigstens eine Rückstromsperrelement (13) verliersicher an dem Adapterkolben (9) anzuordnen.

7. Spritzgießanordnung (1) nach einem der vorhergehenden Ansprüche, **dadurch gekennzeichnet, dass** die grundkörperseitige Befestigungsschnittstelle (7) als Befestigungsflansch (15) ausgebildet ist oder einen solchen umfasst, über welchen der Grundkörper (6) an oder im Bereich eines freien Endes der Aufnahmekammer (2) befestigbar ist.

8. Spritzgießanordnung (1) nach einem der vorhergehenden Ansprüche, **dadurch gekennzeichnet, dass** die grundkörperseitige Befestigungsschnittstelle (7, 17, 27) oder der Befestigungsflansch (15) einen Formschlussabschnitt (16) aufweist, welcher eingerichtet ist, mit wenigstens einem korrespondierenden, an oder im Bereich eines freien Endes der Aufnahmekammer (2) angeordneten oder ausgebildeten Gegenformschlussabschnitt formschlüssig zusammenzuwirken.

9. Spritzgießanordnung (1) nach einem der vorhergehenden Ansprüche, **dadurch gekennzeichnet, dass** der Düsenkörper (11) wenigstens eine Befestigungsschnittstelle (27) aufweist, über welche der Düsenkörper (11) an dem Grundkörper (6) befestigbar oder befestigt ist, oder
wobei der Düsenkörper (11) einstückig mit dem Grundkörper (6) ausgebildet ist.

10. Spritzgießanordnung (1) nach einem der vorhergehenden Ansprüche, **dadurch gekennzeichnet, dass** ein aus dem definierten Aufnahmevolumen über die Austrittsöffnung (10) in einem Hub (18) des Adapterkolbens (9) ausgebrachte Spritzgießmaterial ein Volumen zwischen 0,5 und 20 cm³, bevorzugt zwischen 1 und 10 cm³, besonders bevorzugt zwischen 1 und 7 cm³, weiter bevorzugt zwischen 1 und 5 cm³, ist.

11. Spritzgießanordnung (1) nach einem der vorhergehenden Ansprüche, **dadurch gekennzeichnet, dass** die Schnecke (4) und/oder der Adapterkolben (9) bewegbar zwischen einer ersten Position (19), welche mit einer Einspritzposition, in welcher plastifiziertes Spritzgießmaterial in eine Formwerkzeugkavität eines Spritzgießwerkzeugs einbringbar ist, korreliert, und einer zweiten Position, welche mit einer Nicht-Einspritzposition, in welcher kein plastifiziertes Spritzgießmaterial in eine Formwerkzeugkavität eines Spritzgießwerkzeugs einbringbar ist, korreliert, gelagert ist.

12. Spritzgießanordnung (1) **dadurch gekennzeichnet, dass** die Schnecke als Vollmaterialschnecke ausgebildet ist.

13. Adaptereinrichtung (5) zur Einstellung eines in eine Formwerkzeugkavität eines Spritzgießwerkzeugs einzuspritzenden Menge an Spritzgießmaterial für eine Spritzgießanordnung (1) nach einem der vorhergehenden Ansprüche, wobei die Adaptereinrichtung (5) aufweist:
- einen Grundkörper (6), welcher wenigstens eine Befestigungsschnittstelle (7) aufweist, über welche er an dem Aufnahmekörper (3) befestigbar oder befestigt ist, wobei in dem Grundkörper (6) wenigstens eine Aufnahmeöffnung (8) zur Aufnahme eines an der Schnecke (4) befestigbaren oder befestigten Adapterkolbens (9) ausgebildet ist,
- einen in der wenigstens einen Aufnahmeöffnung (8) aufnehmbaren oder aufgenommenen Adapterkolben (9), welcher wenigstens eine Befestigungsschnittstelle (17) aufweist, über welche der Adapterkolben (9) an der Schnecke (4) befestigbar oder befestigt ist,
- einen an dem Grundkörper (6) angeordneten oder ausgebildeten, wenigstens eine, insbesondere düsenartige bzw. -förmige, Austrittsöffnung (10) aufweisenden Düsenkörper (11), wobei der Düsenkörper (11) und der Adapterkolben (9) ein definiertes Aufnahmevolumen für eine über die Austrittsöffnung (10) in eine Formwerkzeugkavität eines Spritzgießwerkzeugs einzuspritzende Menge an Spritzgießmaterial begrenzen.

14. Spritzgießmaschine, umfassend eine Spritzgießanordnung (1) nach einem der Ansprüche 1 bis 12.
